# EUROPÄISCHE PATENTSCHRIFT

(11) **EP 2 929 665 B1**
(45) Veröffentlichungstag und Bekanntmachung des Hinweises auf die Patenterteilung: **30.10.2019**
(21) Anmeldenummer: 13802297.5
(22) Anmeldetag: 27.11.2013
(51) Int. Cl.: H04L 29/06, H04L 9/32, H04L 12/28

(54) **VERFAHREN, ANORDNUNG ZUR VERARBEITUNG VON INFORMATIONEN IN EINEM HAUSHALTSGERÄT SOWIE HAUSHALTSGERÄT**
METHOD, ASSEMBLY FOR PROCESSING INFORMATION IN A DOMESTIC APPLIANCE, AND DOMESTIC APPLIANCE
PROCÉDÉ, ENSEMBLE DE TRAITEMENT D'INFORMATIONS DANS UN APPAREIL MÉNAGER AINSI QU'APPAREIL MÉNAGER

(30) Priorität: 04.12.2012 DE 102012222248
(43) Veröffentlichungstag der Anmeldung: 14.10.2015
(73) Patentinhaber: BSH Hausgeräte GmbH, 81739 München (DE)
(72) Erfinder: GAUGLER, Johannes, 93073 Neutraubling (DE); KOLBE, Andreas, 12683 Berlin (DE); LEITL-NOBEL, Martin, 86465 Welden (DE); RANCK, Sharon, 89407 Dillingen (DE); SIPPEL, Matthias, 83329 Waging am See (DE)
(86) Internationale Anmeldenummer: PCT/EP2013/074873
(87) Internationale Veröffentlichungsnummer: WO 2014/086640

(56) Entgegenhaltungen:
- EP-A2- 1 215 639
- DE-A1-102010 031 283
- US-A1- 2009 156 193
- US-A1- 2011 055 565
- US-A1- 2012 230 482
- SHINTARO MIZUNO ET AL: "A Mobile Phone Based Authentication Service for Home Appliances", CONSUMER COMMUNICATIONS AND NETWORKING CONFERENCE, 2007. CCNC 2007. 20 07 4TH IEEE, IEEE, PI, 1. Januar 2007 (2007-01-01), Seiten 1168-1169, XP031087967, ISBN: 978-1-4244-0667-8

## Beschreibung

Die Erfindung betrifft ein Verfahren und eine Anordnung zur Verarbeitung von Informationen in einem Haushaltsgerät sowie ein Haushaltsgerät welches für die Durchführung des Verfahrens geeignet bzw. Bestandteil der Anordnung sein kann.

Die zunehmende Vernetzung von Haushaltsgeräten über ein innerhalb eines Haushalts eingerichteten Kommunikationsnetz (auch als Hausnetzwerkumgebung oder "Smart Home" bezeichnet"), welches darüber hinaus mit einem übergeordneten globalen Kommunikationsnetz (auch als Internet bezeichnet) verbunden ist, eröffnet neue Möglichkeiten und Dienste für die Wartung von einem Haushalt zugeordneten Haushaltsgeräten. Beispielsweise können von Herstellern der Haushaltsgeräte aus der Ferne steuerbare "Remote-Kundendienste" oder "Remote-Wartungsdienste" angeboten werden, welche sowohl dem Kunden als auch dem jeweiligen Betreiber des Kundendienstes eine Zeit- und Kosteneinsparung ermöglichen. Beispielhaft sei für derartige Wartungsfunktionen (auch als Kundendienst-Transaktion bezeichnet) die software-seitige Installation von neuen Prozess- bzw. Programm-Eigenschaften, die Ausführung von Firmware-Updates, Fehlerdiagnosen und Kundendienst-Testprozeduren sowie spezifische Anpassungen von Geräteeinstellungen durch einen Remote-Kundendienst bzw. Remote-Kundenservice genannt. Die US 2009/0156193 A1 z.B. beschreibt einen Ansatz, bei dem ein Terminal akustisch über ein Sprachnetzwerk an einen Dienstanbieter angebunden wird.

Nachteilig birgt ein derartiger Remote-Kundendienst Gefahren, welche die Sicherheit sowohl der auf Seiten der Kunden eingerichteten Netzwerke als auch der an die Netzwerke bzw. Heimnetze angeschlossenen, installierten Haushaltsgeräte gefährden, in Folge dessen die Akzeptanz der Kunden beeinträchtigt werden könnte.

Eine Gefahr besteht in der missbräuchlichen Nutzung von privilegierten Zugangs-Möglichkeiten und Funktionen für Kundendienst-Aufgaben in einem Haushaltsgerät z.B. durch Internet-Kriminalität. Ein weiterer Gefahrenpunkt sind die Ausführung von Funktionen, welche den Zustand oder Betrieb des Haushaltsgerätes verändern können, sowie die Erfassung von Informationen an dem Haushaltsgerät durch einen Remote-Kundendienst ohne die unmittelbare und überwachende Kontrolle durch den Kunden selbst (d.h. die Befürchtung einer unkontrollierten, unbegleitenden Abgabe der Hoheit über das Haushaltsgerät).

Der gesamte Bereich der Anbindung von Haushaltsgeräten, die Einbindung in Hausnetzwerkumgebungen sowie deren Anschluss an das Internet steht vor dem Beginn einer breiten Einführung in den Massenmarkt. Dies betrifft insbesondere den speziellen Bereich der Bereitstellung und Nutzung von Remote-Kundendienstleistungen bzw. -Kundenservices. Aktuell sind noch keine Lösungen im Bereich der Haushaltsgeräte bekannt, die auf die genannten Gefahren hin ausgerichtet sind.

Die Aufgabe der Erfindung besteht darin, die vorstehend genannten Nachteile zu vermeiden und insbesondere ein Wartungsverfahren, insbesondere ein Remote-Wartungsverfahren anzugeben welches eine breite Akzeptanz auf Seiten der Kunden von Haushaltsgeräten erreicht.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird seitens zumindest eines Haushaltsgerätes eine Nachricht an eine zentrale Einheit übermittelt sowie von der zentralen Einheit erste Informationen über eine erste Kommunikationsbeziehung an das Haushaltsgerät übermittelt. Von der zentralen Einheit werden zweite Informationen an ein Kommunikationsendgerät übermittelt und von dem Kommunikationsendgerät die zweiten Informationen über eine zweite Kommunikationsbeziehung an das Haushaltsgerät übermittelt. Durch das Haushaltsgerät werden die ersten Informationen mit Hilfe der zweiten Informationen überprüft.

Das vorgeschlagene Verfahren ermöglicht insbesondere einen gesicherten und autorisierten Remote- oder Fern-Kundendienst mittels einer 2-Wege-Kommunikation, basierend auf der Nutzung einer ersten Kommunikationsbeziehung zwischen dem Haushaltsgerät und der zentralen Einheit (wie z.B. dem Fern-Kundendienst oder Remote-Kundenservice) und einer zweiten Kommunikationsbeziehung über ein Kommunikationsendgerät. Einem Kunden eines Haushaltsgerätes wird somit eine Kommunikationsbeziehung bzw. Kommunikationsverbindung (die optional selbst gesichert ausgeführt sein kann) zwischen dem zu wartenden Haushaltsgerät und dem Fern-Kundendienst (Remote-Kundenservice bzw. Remote-Kundendienstcenter) des Herstellers des Haushaltsgerätes bereitgestellt, über welche auch z.B. privilegierte und sensible Funktionen, insbesondere Wartungsfunktionen wie z.B. Fernsteuerungs- und Fernwartungs-Aufgaben ausgeführt werden können.

Derartige Funktionen können dabei alle Arten von kundendienstspezifischen Funktionen umfassen einschließlich jede Art von Aktualisierung, Durchführung und Freigabe von derartigen Funktionen sowie Aktionen, Kommandos oder Kommandosequenzen. Insbesondere können über die erste Kommunikationsbeziehung Daten (Aktualisierungen, Erweiterungen des Funktionsumfangs, etc.) an das Haushaltsgerät übertragen werden. Die "Nutzbarmachung" bzw. Aktivierung der Daten erfolgt vorzugsweise erst über die zweite Kommunikationsbeziehung, die die zweiten Informationen bereitstellt.

Hierbei besteht ein Vorteil darin, dass z.B. Aktualisierungsdaten (z.B. ein Update) für das Haushaltsgerät über die erste Kommunikationsbeziehung von der zentralen Einheit an das Hanshaltsgerät übertragen wird, was je nach Datenvolumen eine beträchtliche Zeit dauern kann. Die eigentliche Aktualisierung wird erst nach Erhalt der zweiten Informationen über die zweite Kommunikationsbeziehung durchgeführt.

Vorteilhaft behält der Kunde bei jeder einzelnen Remote-Kundendienst-Transaktion am Haushaltsgerät - d.h. Übermittlung von Wartungsinformationen und ggfs. Ausführung von weiteren darauf aufbauenden Aktionen oder Funktionen durch das Haushaltsgerät - weiterhin die unmittelbare und zeitliche Kontrolle über die eigentliche Ausführung der Wartungsfunktionen. Durch die dadurch beim Nutzer bzw. Kunden verbleibende Kontrolle und die zugleich mögliche Vermeidung von Angriffspunkten durch Internet-Kriminalität wird eine gesteigerte Akzeptanz auf Kundenseite erreicht.

Die im Rahmen des vorgeschlagenen Verfahrens an das Haushaltsgerät übermittelten ersten Informationen bilden beispielsweise die Informationsbasis für die Durchführung von Wartungsfunktionen am Haushaltsgerät. Weiterbildend können nach erfolgter Durchführung der Wartungsfunktionen Informationen über wartungsspezifische Ergebnisse oder zusätzlich weiter zu vermittelnde Informationen an die zentrale Einheit bzw. an das Kundendienstcenter übermittelt werden.

Die Art des betrachteten Haushaltsgeräts, insbesondere elektrischen Haushaltsgeräts, ist nicht beschränkt und kann Haushalts-Großgeräte und/oder Haushaltskleingeräte umfassen. Das Haushaltsgerät mag insbesondere mindestens ein Gargerät umfassen, z.B. einen Backofen, eine Mikrowelle, einen Dampfgarer usw. Das Haushaltsgerät mag auch mindestens ein Kühlgerät, z.B. einen Kühlschrank und/oder eine Kühltruhe umfassen. Das Haushaltsgerät mag auch mindestens ein Wäschebehandlungsgerät umfassen, z.B. eine Waschmaschine oder ein Wäschetrockner. Das Haushaltsgerät mag ferner mindestens ein Spülgerät umfassen, z.B. einen Geschirrspüler. Das Haushaltsgerät mag insbesondere mindestens eine Kaffeemaschine und/oder Toaster umfassen.

Eine Weiterbildung ist es, dass das Überprüfen eine Authentifizierung der ersten Informationen umfasst.

Beispielsweise können Haushaltsgerät und die zentrale Einheit ein asymmetrisches Verschlüsselungsverfahren (Public-Key-Kryptographie) einsetzen, um wechselseitig die übertragenen Daten zu signieren, die Signatur zu authentifizieren und/oder die Daten zu verschlüsseln und zu entschlüsseln. Die Schlüsselvergabe und/oder Schlüsselverwaltung kann z.B. durch den Hersteller der Haushaltsgeräte erfolgen.

Eine andere Weiterbildung ist es, dass nach einer erfolgreichen Überprüfung zumindest eine vorgegebene Aktion durchgeführt wird.

Insbesondere ist es eine Weiterbildung, dass die vorgegebene Aktion
- eine Aktualisierung einer Software des Haushaltsgerätes,
- eine Erweiterung einer Funktionalität des Haushaltsgerätes,
- eine Durchführung einer Wartungsaktion oder Wartungsanwendung,
- eine Übermittlung einer Wartungsinformation an einen Adressaten,
- eine Durchführung eines Tests,
- eine Ausführung von Kommandoinformationen zur Diagnosesteuerung,
- eine Ausführung der ersten Informationen oder
- eine Verwendung der ersten Informationen,
umfasst.

Auch ist es eine Weiterbildung, dass die zweiten Informationen über eine Mobilfunk-Verbindung an das Kommunikationsendgerät übermittelt werden. Die Mobilfunk-Verbindung umfasst z.B. eine beliebige mobile Kommunikationsverbindung, z.B. eine Verbindung über ein mobiles Telekommunikationsnetzwerk.

Ferner ist es eine Weiterbildung, dass die zweiten Informationen mittels
- einer MMS, oder
- einer SMS, oder
- einer E-Mail
übermittelt werden.

Im Rahmen einer zusätzlichen Weiterbildung ist die zweite Kommunikationsbeziehung als
- Nahbereichskommunikation-Verbindung,
- Bluetooth-Verbindung oder
- Infrarot-Verbindung
ausgestaltet.

Durch die Ausgestaltung der zweiten Kommunikationsbeziehung als nur eine begrenzte Reichweite aufweisende Punkt-zu-Punktverbindung ist die Herstellung bzw. Einrichtung einer derartig ausgestalteten Kommunikationsbeziehung zwischen dem Haushaltsgerät und dem Kommunikationsendgerät als Zustimmung des Nutzers (sowohl des Haushaltsgerätes als auch des Kommunikationsendgerätes) zur Durchführung einer bevorstehenden vorgegebenen Aktion, z.B. einer spezifischen Kundendienst-Transaktion, zu verstehen. Dies gibt dem Nutzer des Haushaltsgeräts die Kontrolle über die Ausführung eines Remote-Kundendienstes oder -Kundenservice an seinem Haushaltsgerät.

Eine nächste Weiterbildung besteht darin, dass die zweiten Informationen zumindest teilweise Schlüsselinformationen umfassen.

Bei den Schlüsselinformationen handelt es sich um Schlüssel oder um Informationen, die als Schlüssel einsetzbar sind. Grundsätzlich sind asymmetrische oder symmetrische Verschlüsselungsmechanismen in Verbindung mit der hier beschriebenen Lösung einsetzbar. Mit Hilfe der Schlüsselinformationen können an das Haushaltsgerät zu übermittelnde Informationen, z.B. Wartungsinformationen, verschlüsselt und/oder signiert werden. Alternativ kann die Verschlüsselung oder Signierung entfallen - so können beispielsweise die Schlüsselinformationen oder ein durch diese gebildeter Prüf-Schlüssel in die an das Haushaltsgerät zu übermittelnden Wartungsinformationen eingefügt oder diesen angehängt werden.

Gemäß einer weiteren Ausgestaltung können die Schlüsselinformationen separat über die erste Kommunikationsverbindung, z.B. nach einer bereits erfolgten Übermittlung der Wartungsinformationen, an das Haushaltsgerät übermittelt und in diesem den bereits empfangenen Wartungsinformationen zur nachfolgenden Überprüfung zugeordnet werden. Die separate Übermittlung der Schlüsselinformationen kann auch bereits vor oder zusammen mit der Übermittlung der Wartungsinformationen erfolgen.

Beispielsweise können die Schlüsselinformationen nur eine begrenzte zeitliche Gültigkeit aufweisen, so dass im Haushaltsgerät die Überprüfung innerhalb einer vorgegebenen Zeitspanne zu erfolgen hat. Die Dauer der zeitlichen Gültigkeit (z.B. ab Übermittlung der eine Wartungsanforderung repräsentierenden Nachricht) kann im Haushaltsgerät hinterlegt oder mittels einer weiteren Information an das Haushaltsgerät übermittelt werden.

Eine Ausgestaltung ist es, dass die Nachricht von dem Haushaltsgerät vor der Übermittlung mit Hilfe eines asymmetrischen Verschlüsselungsverfahrens signiert wird.

Eine weitere Ausführungsform besteht darin, dass die über das Kommunikationsendgerät übermittelten zweiten Informationen vor der Übermittlung von der zentralen Einheit mit Hilfe eines asymmetrischen Verschlüsselungsverfahrens signiert werden.

Die optionale Anwendung eines asymmetrischen Verschlüsselungsverfahrens bei der Übermittlung der Nachricht als auch der zweiten Informationen stellt eine zusätzliche Sicherheit für die Ausführung von Remote-Kundendienst-Transaktionen dar.

Eine nächste Ausgestaltung ist es, dass die über die zweite Kommunikationsbeziehung übermittelten signierten zweiten Informationen von dem Haushaltsgerät authentifiziert werden.

Auch ist es eine Ausgestaltung, dass die übermittelten signierten zweiten Informationen von dem Kommunikationsendgerät authentifiziert werden.

Dies stellt eine zusätzliche Sicherheitsmaßnahme dar, da die Authentifizierung der signierten zweiten Informationen entweder in dem Haushaltsgerät oder in dem Kommunikationsendgerät oder in beiden genannten Geräten erfolgen kann.

Eine Weiterbildung besteht darin, dass der Aufbau bzw. die Einrichtung der zweiten Kommunikationsbeziehung durch Eingabe eines persönlichen Identifizierungscodes (PIN) gesichert ist.

Die lokale Eingabe von Code-Informationen wie z.B. einer PIN-Nummer an dem Kommunikationsendgerät stellt eine weitere vorteilhafte Maßnahme zur Absicherung des vorgeschlagenen Verfahrens dar. Die Überprüfung der eingegebenen Code-Informationen kann dabei lokal durch das Kommunikationsendgerät oder durch eine zentrale Einrichtung außerhalb des Kommunikationsendgerätes wie beispielsweise durch das die Gegenstelle der zweiten Kommunikationsbeziehung repräsentierende Haushaltsgerät erfolgen. Alternativ kann die Überprüfung der Code-Informationen durch die Gegenstelle der Mobilfunkverbindung, also der zentralen Einheit wie z.B. dem Remote-Kundenservice, erfolgen.

Eine zusätzliche Ausgestaltung ist es, dass die erste Kommunikationsbeziehung als kryptographisch gesicherte Datenverbindung über das Internet ausgestaltet ist.

Die kryptografisch gesicherte Internetverbindung bewirkt eine weitere Verbesserung der Sicherheit des vorgeschlagenen Verfahrens.

Die vorstehend genannte Aufgabe wird auch gelöst durch eine Anordnung zur Verarbeitung von Informationen in einem Haushaltsgerät, mit dem Haushaltsgerät zugeordneten Sendemitteln zum Übermitteln einer Nachricht an eine zentrale Einheit und zumindest einer der zentralen Einheit zugeordneten Einrichtung zum Übermitteln von ersten Informationen über eine erste Kommunikationsbeziehung an das Haushaltsgerät, sowie zum Übermitteln von zweiten Informationen an ein Kommunikationsendgerät. Dabei sind dem Kommunikationsendgerät Sendemittel zum Übermitteln der zweiten Informationen über eine zweite Kommunikationsbeziehung an das Haushaltsgerät zugeordnet. Dem Haushaltsgerät sind Überprüfungsmittel zur Überprüfung der ersten Informationen mit Hilfe der zweiten Informationen zugeordnet.

Die vorstehend genannte Aufgabe wird auch durch ein Haushaltsgerät gelöst welche Bestandteil der oben beschriebenen Anordnung sein kann.

Die Schritte des hier beschriebenen Verfahrens sind für die Anordnung sowie für das Haushaltsgerät entsprechend anwendbar.

Ausführungsbeispiele der Erfindung werden nachfolgend anhand einer Zeichnung dargestellt und erläutert.

Es zeigt:

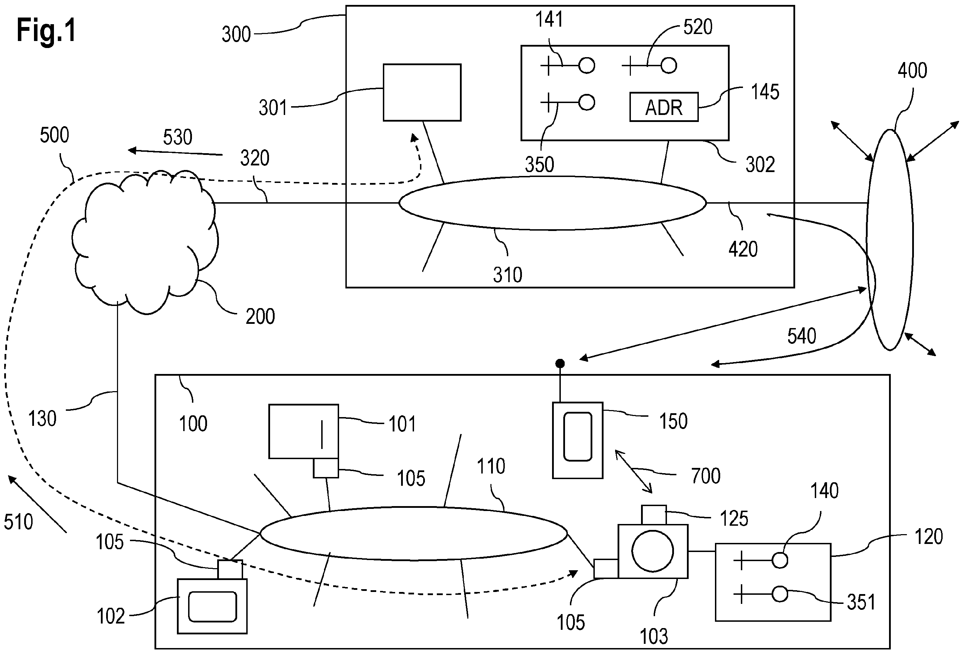

- Fig.1: in Form einer schematischen Darstellung ein Anwendungsscenario des vorgeschlagenen Verfahrens.

**Fig.1** zeigt ein in einem Haushalt 100 eingerichtetes lokales Kommunikationsnetz bzw. Heimnetzwerk 110, an welches mehrere dem Haushalt 100 zugeordnete Haushaltsgeräte 101 bis 103 jeweils über eine Netzwerkschnittstelle bzw. ein Netzwerkinterface 105 angeschlossen sind. Vorzugsweise ist das jeweilige Netzwerkinterface 105 Bestandteil des jeweiligen Haushaltsgerätes 101 bis 103. Gemäß dem dargestellten Anwendungsszenario ist ein erstes Haushaltsgerät 101 als Kühlschrank, ein zweites Haushaltsgerät 102 als Backofen und ein drittes Haushaltsgerät 103 als Waschmaschine ausgestaltet. Die Kommunikationsverbindung der jeweiligen Haushaltsgeräte mit dem lokalen Kommunikationsnetz 110 kann beispielsweise auf WLAN- (Wireless Local Area Network), LAN- oder Powerline-Übertragungstechnologie basieren.

Das Heimnetzwerk 110 des Haushalts 100 ist über einen nicht dargestellten Hausanschluss mit einem übergeordneten globalen Kommunikationsnetz 200 verbindbar oder verbunden (durch eine Verbindung 130 symbolhaft dargestellt). Das Kommunikationsnetz 200 kann das Internet sein oder umfassen. An das globale Kommunikationsnetz 200 ist über eine Verbindung 320 ein lokales Kommunikationsnetz 310 eines Kundendienstcenters 300 angeschlossen, welches als Remote-Kundendienstcenter zur Bereitstellung von Remote-Wartungsdiensten ausgestaltet ist. Das Kundendienstcenter 300 umfasst eine Wartungseinrichtung 301 (z.B. in Form mindestens eines Servers) zum Empfang von Kundendienstanforderungen und zum Generieren von entsprechenden Wartungsinformationen sowie eine Verschlüsselungseinrichtung 302 zur Generierung von Schlüsselinformationen zum Verschlüsseln und signieren von wartungsspezifischen Informationen. Zusätzlich ist die Verschlüsselungseinrichtung 302 zur Authentifizierung bzw. Verifizierung von am Kundendienstcenter 300 eintreffenden Kundendienstanforderungen oder weiteren wartungsspezifischen Informationen eingerichtet.

Das lokale Kommunikationsnetz 310 des Kundendienstcenters 300 ist weiterhin über eine symbolhaft dargestellte Verbindung 420 mit einem seitens eines Mobilfunkanbieters betriebenen mobilen Kommunikationsnetz 400 verbindbar, welches beispielsweise nach mindestens einem Mobilfunkstandard wie GSM, UMTS, LTE ausgestaltet ist. Das mobile Kommunikationsnetz 400 ist unter anderem zur Übermittlung von Text- und/oder Kurznachrichten wie SMS oder MMS/QDR ausgestattet.

Für die nachfolgenden Ausführungen sei angenommen, dass die im Haushalt 100 angeordnete Waschmaschine 103 für eine mögliche "Fern- bzw. Remote-Wartung" seitens des Kundendienstcenters 300 des Herstellers der Waschmaschine in Sinne des erfindungsgemäßen Verfahrens entsprechend ausgestattet und konfiguriert ist. Hierfür ist der Waschmaschine 103 eine Verschlüsselungseinrichtung 120 zugeordnet, welche eine asymmetrischen und/oder symmetrische Verschlüsselung ermöglicht. Es sei angemerkt dass auch die weiteren im Heimnetzwerk 110 angeordneten Haushaltsgeräte wie der Kühlschrank 101 und der Backofen 102 ebenso für eine Remote-Wartung entsprechend ausgestattet und konfiguriert sein können - der Ablauf der vorgestellten Lösung wird jedoch bei dem in Fig.1 dargestellten Anwendungsszenario beispielhaft anhand der Waschmaschine 103 erläutert. Die im Haushalt 100 angeordneten Haushaltsgeräte 101 bis 103 können von verschiedenen Herstellern stammen - dementsprechend kann optional die Remote-Wartung für jedes Haushaltsgerät auch je nach Hersteller von unterschiedlichen Kundendienstcentern aus erfolgen.

Bei Anwendung eines symmetrischen Verschlüsselungsverfahrens erfolgt die Ver- und Entschlüsselung von Informationen mit dem gleichen (geheimen) Schlüssel. Dagegen basiert ein asymmetrisches Verschlüsselungsverfahren auf einem Schlüsselpaar, welches aus einem geheimen Teil ("Geheimnis", privater Schlüssel bzw. private key) und einem nicht geheimen Teil (öffentlicher Schlüssel bzw. public key) besteht. Der öffentliche Schlüssel ermöglicht es jedem Dritten, Daten für den Inhaber des privaten Schlüssels zu verschlüsseln, dessen digitale Signaturen zu prüfen oder den Inhaber zu authentifizieren. Der private Schlüssel ermöglicht es seinem Inhaber, mit dem zugehörigen öffentlichen Schlüssel verschlüsselte Daten zu entschlüsseln, digitale Signaturen zu erzeugen oder sich zu authentisieren.

Per Konfiguration ab Herstellung der Waschmaschine 103 ist beispielsweise in der Verschlüsselungseinrichtung 120 zum einen ein privater Schlüssel 140 gespeichert, welcher im Rahmen eines asymmetrischen Verschlüsselungsverfahrens der Waschmaschine 103 zugeordnet ist. Der hierzu korrespondierende öffentliche Schlüssel 141 ist in der Verschlüsselungseinrichtung 302 des Kundendienstcenters 300 gespeichert. Weiterhin ist in der Verschlüsselungseinrichtung 120 ein öffentlicher Schlüssel 351 gespeichert, welcher im Rahmen eines weiteren asymmetrischen Verschlüsselungsverfahrens dem Kundendienstcenter 300 des Herstellers der Waschmaschine 103 zugeordnet wurde. Ein hierzu korrespondierender privater Schlüssel 350 des Kundendienstcenters 300 ist in der Verschlüsselungseinrichtung 302 gespeichert.

Weiterhin ist im Sinne der Erfindung eine eindeutige Adressinformation 145 eines dem Haushalt 100 bzw. dem Nutzer der Waschmaschine 103 zugeordneten mobilen Kommunikationsendgerätes 150 (Smartphone) in der Verschlüsselungseinrichtung 302 des Kundendienstcenter 300 gespeichert. Das in Fig.1 dargestellte mobile Kommunikationsendgerät 150 ist beispielhaft als ein Smartphone ausgestaltet, das anhand seiner Mobilfunknummer 145 als eindeutige Adressinformation im mobilen Kommunikationsnetz 400 identifizierbar ist. Alternativ kann das Smartphone z.B. als ein Tablet-PC mit beliebig anderer eindeutig zugeordneten Adressinformationen 145 ausgestaltet sein.

Die Mobilfunknummer 145 des dem Haushalt 100 zugeordneten Smartphones 150 kann beispielsweise im Rahmen einer Registrierung der Waschmaschine 103 an das Kundendienstcenter 300 übermittelt werden, so dass ein für den jeweiligen Haushalt 100 spezifischer Mobilfunk-Zugang beim Kundendienstcenter 300 des Herstellers der jeweiligen Haushaltsgerätes (wie hier der Waschmaschine 103) registriert bzw. hinterlegt wird.

Die in der Waschmaschine 103 angeordnete Netzwerkschnittstelle 105 ist zudem mit einem gemäß TCP/IP ausgestalteten Protokoll-Stack ausgestattet, welcher auf einer beliebigen darunter angeordneten Netzwerk-Übertragungstechnologie aufsetzen kann, wie beispielsweise WiFi (Wireless LAN), ZigBee (Wireless Mesh Network basierend auf dem Standard IEEE 802.15.4), Ethernet (IEEE 802.3), PLC (Powerline Communication), LTE (Long Term Evoution), GSM (Global System for Mobile Communications). Die Netzwerkschnittstelle 105 der Waschmaschine 103 ist dabei derart eingerichtet, dass eine kryptografisch gesicherte Kommunikationsverbindung, beispielsweise mittels SSL/TLS (Secure Socket Layer / Transport Layer Security), für aufzubauende Kommunikationsbeziehungen bzw. Kommunikationsverbindungen über das globale Kommunikationsnetz 200 benutzt wird. Ebenfalls per Vorkonfigurierung ist eine dem Protokoll-Stack konforme Netzwerkadresse bzw. ein Hostname des Kundendienst-Servers 301 des Herstellers der Waschmaschine 103 in der Netzwerkschnittstelle 105 gespeichert.

Wie bereits angemerkt können die in Fig.1 dargestellten und an das Heimnetzwerk 110 angeschlossenen Haushaltsgeräte 101 bis 103 von unterschiedlichen Herstellern stammen - dementsprechend weisen die Haushaltsgeräte 101 bis 103 verschiedene individuelle öffentliche Schlüssel der jeweiligen Hersteller der Haushaltsgeräte sowie verschiedene individuelle Netzwerkadressen bzw. Hostnamen der jeweiligen Kundendienst-Server der einzelnen Hersteller auf.

Alternativ können die in der Verschlüsselungseinrichtung 120 oder in der jeweiligen Netzwerkschnittstelle 105 gespeicherten Informationen direkt in der Waschmaschine 103, bzw. in einer Steuereinrichtung (nicht dargestellt) der Waschmaschine gespeichert sein.

Im vorliegenden Ausführungsbeispiel ist die Waschmaschine 103 derart konfiguriert, dass in einem eintretenden Wartungs- bzw. Kundendienstfall durch die Waschmaschine 103 eigenständig über das lokale Heimnetzwerk 110 sowie den Hausanschluss des Haushalts 100 eine gesicherte, bidirektionale Verbindung über das Internet 200 zum Kundendienstcenter 300 bzw. zu dem jeweiligen Kundendienst-Server 301 des Herstellers der Waschmaschine aufgebaut wird - durch eine gestrichelte Verbindung 500 dargestellt. Nach Aufbau der Internetverbindung 500 wird durch die Waschmaschine 103 eine Nachricht bzw. Kundendienstanforderung 510 einschließlich einer die Waschmaschine 103 identifizierenden Geräteidentifikation sowie begleitender Fehlerinformationen generiert, mit Hilfe des zugeordneten privaten Schlüssels 140 signiert und anschließend über die Internetverbindung 500 an den Kundendienstserver 301 weitergeleitet.

Durch den Kundendienstserver 301 wird die empfangene signierte Kundendienstanforderung 510 mit Hilfe des in der Verschlüsselungseinrichtung 302 gespeicherten öffentlichen Schlüssels 141 der Waschmaschine 103 verifiziert, d.h. die Identität der Waschmaschine 103 als Ausgangspunkt der Kundendienstanforderung 510 geprüft. Die Verifizierung der Kundendienstanforderung 510 kann auch durch die Verschlüsselungseinrichtung 302 erfolgen. Ein positives Ergebnis der Prüfung bzw. eine erfolgreiche Autorisierung wird als digitale Berechtigung angesehen, die im Kundendienstcenter 300 im Rahmen der Registrierung hinterlegte Mobilfunknummer 145 des dem Haushalt 100 zugeordneten Smartphone 150 und gegebenenfalls weitere kundenspezifische Informationen zu benutzen. Abhängig von der Art der Kundendienstanforderung 510 werden durch den Kundendienstserver 301 oder durch einen Mitarbeiter des Kundendienstcenters 300 für die Durchführung von Wartungsfunktionen geeignete anforderungsspezifische Wartungsinformationen generiert, welche beispielsweise für die Waschmaschine 103 erforderliche Kundendienst- bzw. Wartungsfunktionen für Remote-Diagnostik, und/oder einen Remote-Test und/oder ein Remote-Firmware-Update umfassen. Weiterhin können die Wartungsinformationen zusätzlich erforderliche Daten oder ganze Dateien sowie komplette Softwarepakete (Bundles) umfassen.

Vor der Übertragung der anforderungsspezifischen Wartungsinformationen werden diese z.B. mit exklusiv für diese Wartungsanforderung bzw. Kundendienst-Transaktion durch die Verschlüsselungseinrichtung 302 generierten Schlüsselinformationen 520 - im Folgenden auch als Geheimnis, Schlüssel oder Prüf-Schlüssel bezeichnet - versehen bzw. signiert. Der Prüf-Schlüssel 520 ist vorzugsweise in der Verschlüsselungseinrichtung 302 des Kundendienstcenters 300 hinterlegt. Die mit dem Prüf-Schlüssel 520 versehenen anforderungsspezifischen Wartungsinformationen 530 werden anschließend über die aufgebaute Internetverbindung 500 (erste Kommunikationsbeziehung) an die Waschmaschine 103 übermittelt und von dieser als zu der Kundendienst-Transaktion gehörende Wartungsinformationen 530 entsprechend gespeichert. Vor eine Weiterverarbeitung der gespeicherten Wartungsinformationen 530 werden diese beispielsweise durch die Waschmaschine 103, d.h. durch eine in der Waschmaschine 103 angeordnete Steuereinrichtung (nicht dargestellt) geprüft bzw. verifiziert.

Es sei angemerkt, dass der Prüf-Schlüssel 520 den anforderungsspezifischen Wartungsinformationen 530 beliebig zugeordnet werden kann - die Zuordnung kann dabei z.B. durch Verschlüsselung oder Signierung der Wartungsinformationen 530 erfolgen. Optional kann die Verschlüsselung oder Signierung entfallen, beispielsweise kann der Prüf-Schlüssel 520 in die zu übermittelnden Wartungsinformationen 530 eingefügt oder diesen angehängt werden. Alternativ kann der Prüf-Schlüssel 520 separat über die Internetverbindung 500, d.h. nach einer bereits erfolgten Übermittlung der Wartungsinformationen 530, an die Waschmaschine 103 übermittelt und in dieser den bereits empfangenen Wartungsinformationen 530 zugeordnet werden. So kann beispielsweise zur Bearbeitung einer Kundendienstanforderung zunächst ein umfangreiches Datenvolumen an das Haushaltsgerät übermittelt werden, was gegebenenfalls mit einer langen Übertragungszeit (z.B. mehrere Stunden oder auch Tage) verbunden ist. Erst nach erfolgter Übertragung der Daten, z.B. durch eine entsprechende Rückmeldung an das Kundencenter angezeigt, wird der Prüf-Schlüssel 520 generiert und über die erste Kommunikationsbeziehung an die Waschmaschine übermittelt. Gemäß einer weiteren Alternative kann die Übertragung des Prüf-Schlüssel 520 auch vor der Übermittlung der Wartungsinformationen 530 erfolgen. Optional kann die Übertragung des Prüf-Schlüssels 520 mittels des privaten Schlüssels 350 des Kundendienstcenters 300 verschlüsselt werden.

Vorzugsweise hat der Prüf-Schlüssel 520 zeitlich nur eine begrenzte Gültigkeit, so dass die an die Waschmaschine übermittelten Wartungsinformationen 530 bzw. der über die erste Kommunikationsbeziehung übermittelte Prüf-Schlüssel 520 innerhalb einer vorgegebenen Zeitspanne überprüft werden muss.

Wie bereits erläutert basiert das hier vorgeschlagene Verfahren auf dem Konzept einer Zwei-Wege-Kommunikation. Hierzu wird der durch die Verschlüsselungseinrichtung 302 generierte Prüf-Schlüssel 520 zusätzlich mittels einer mobilfunkspezifischen Nachricht, z.B. einer SMS als Textnachricht 540, an das durch die hinterlegte Mobilfunknummer 145 adressierte Smartphone 150 übermittelt.

Die vom Smartphone 150 empfangene Textnachricht 540 wird anschließend über eine als NFC-Verbindung (Near-Field Communication) ausgestaltete, drahtlose Punkt-zu-Punktverbindung 700 (zweite Kommunikationsbeziehung) an eine der Waschmaschine 103 zugeordnete NFC-Empfangsvorrichtung 125 weitergeleitet.

Near Field Communication (auf Deutsch "Nahbereichkommunikation", abgekürzt NFC) ist ein internationaler Übertragungsstandard zum kontaktlosen Austausch von Daten bzw. Informationen über kurze Strecken von bis zu 4 cm. Hierbei sei angemerkt, dass NFC nur ein Beispiel für eine drahtlose Verbindung geringer Reichweite ist. Grundsätzlich sind auch andere Möglichkeiten der Übertragung, drahtlos oder drahtgebunden, von dem Smartphone 150 zu dem Haushaltsgerät, möglich. Vorzugsweise ist für eine solche erfolgreiche Übertragung zu dem Haushaltsgerät jedoch das Smartphone 150 in die Nähe des Haushaltsgeräts zu bringen, z.B. in denselben Raum. Vorzugsweise kann die Übertragung auf wenige Zentimeter oder Meter begrenzt sein. Damit ist sichergestellt, dass keine Freigabe bzw. Übermittlung der zweiten Informationen (Textnachricht) von dem Smartphone 150 an das Haushaltsgerät über große Entfernungen erfolgen kann und somit aus der Ferne die ersten Informationen (Wartungsinformationen) aktiviert werden können.

Durch die Einbeziehung der NFC-Verbindung 700 im Kommunikationsabschnitt zwischen dem Smartphone 150 und dem Haushaltsgerät 103 behält der Kunde die hoheitliche und zeitliche Kontrolle über die Kundendienst-Transaktion und damit auch die Kontrolle über die Ausführung der Kundendienst-Funktionen. Nur durch das aktive Positionieren des Smartphones 150 durch den Kunden in die Nähe (z.B. innerhalb der Reichweite der NFC-Verbindung) des Haushaltsgeräts 103 kann der Prüf-Schlüssel 520 (die zweiten Informationen) zur Überprüfung bzw. Verifizierung und Ausführung der Kundendienst-Transaktion (der ersten Informationen) über die NFC-Verbindung 700 an das Haushaltsgerät 103 übertragen werden. Dann kann der über die Internetverbindung bzw. erste Kommunikationsbeziehung übertragene Prüf-Schlüssel 520 verifiziert und eine vorgegebene Aktion durchgeführt werden. Der Kunde bringt also das Smartphone 150 in die Nähe des Haushaltsgeräts 103, veranlasst die Weiterleitung bzw. Übermittlung des über das mobile Kommunikationsnetz 400 an das Smartphone 150 übertragenen Prüf-Schlüssels 520 und gibt somit seine Zustimmung zur Durchführung der vorgegebene Aktion.

Optional kann die Abfrage einer PIN erfolgen mittels einer Applikation auf dem Smartphone 150, z.B. vor dem Aufbau der NFC-Verbindung 700 oder vor der Übersendung des Prüf-Schlüssels 520.

Alternativ kann die vom Smartphone 150 empfangene und den Prüf-Schlüssel 520 enthaltende Textnachricht 540 über eine drahtgebundene Verbindung, beispielsweise über eine ebenfalls vom Nutzer einzurichtende USB-Verbindung, an die Waschmaschine 103 weitergeleitet werden.

Mit Hilfe des in der Textnachricht 540 übermittelten Prüf-Schlüssels 520 werden die über die Internetverbindung 500 an die Waschmaschine 103 übermittelten, anforderungsspezifischen Wartungsinformationen 530 bzw. der diesen zugeordnete Prüf-Schlüssel 520 auf Übereinstimmung geprüft. Erst bei festgestellter Übereinstimmung wird von der Steuerung der Waschmaschine 103 die vorgegeben Aktion, z.B. die Kundendienst-Transaktion durchgeführt, d.h. die in den Wartungsinformationen 530 enthaltenen Wartungs-Kommandos oder -funktionen entsprechend ausgeführt. In einem darauffolgenden, optionalen Schritt werden Ergebnisse der durchgeführten Kundendienst-Transaktion über die Internetverbindung 500 oder über eine weitere hierfür eingerichtete Verbindung an den Kundendienstserver 301 zur Auswertung zurückgesendet.

Gemäß einer Weiterbildung des vorgeschlagenen Verfahrens kann zur Erhöhung der Sicherheit vor der Übermittlung der Textnachricht 540 diese im Rahmen eines asymmetrischen Verschlüsselungsverfahrens mittels des in der Verschlüsselungseinrichtung 302 hinterlegten privaten Schlüssels 350 des Kundendienstcenters 300 signiert und anschließend die signierte Textnachricht 540 in beschriebenen Art und Weise über das Mobilfunknetz 400 sowie über das (dem Haushalt 100 zugeordnete) Smartphone 150 an die Waschmaschine 103 übermittelt werden. Durch die Waschmaschine 103 erfolgt die Authentifizierung des Kundendienstcenters 300 gegenüber der Waschmaschine 103 mit Hilfe des in der Verschlüsselungseinrichtung 120 gespeicherten öffentlichen Schlüssels 351.

Alternativ kann die Authentifizierung des Kundendienstcenters 300 gegenüber der Waschmaschine 103 auch vor der Übermittlung über die NFC-Verbindung durch das Smartphone 150 erfolgen.

Wie bereits erläutert, wird im Rahmen des vorgeschlagenen Verfahrens der Prüf-Schlüssel 520 (auch bezeichnet als Geheimnis) sowohl über die erste Kommunikationsbeziehung 500 als auch über die zweite Kommunikationsbeziehung 700 an die Waschmaschine 103 übermittelt. Vorzugsweise erfolgt bei mindestens einem dieser Übertragungswege eine Verschlüsselung des Prüf-Schlüssels 520, so dass ein Angreifer den Prüf-Schlüssel 520 nicht im Klartext erkennen kann. Durch Einbindung des Smartphones 150 in den zweiten Übertragungsweg wird vorzugsweise sichergestellt, dass der Prüf-Schlüssel 520 über eine Nahbereichskommunikation 700 an die Waschmaschine 103 übermittelt wird. Nur wenn der über die erste Kommunikationsbeziehung 500 bzw. über den ersten Übertragungsweg übermittelte Prüf-Schlüssel 520 auch über die Nahbereichskommunikation 700 erfolgreich übertragen und verifiziert werden konnte, wird die vorgegebene Aktion ausgeführt.

Der Prüf-Schlüssel 520 kann über die erste und/oder zweite Kommunikationsbeziehung verschlüsselt oder signiert übertragen werden. Hierfür können vorzugsweise die in den Verschlüsselungseinrichtungen 302, 120 des Wartungscenters 300 bzw. der Waschmaschine 103 hinterlegten asymmetrischen Schlüssel 350, 141, 351, 140 verwendet werden. Optional kann ein derartiger Mechanismus auch mit symmetrischen Schlüsseln erreicht werden.

Durch den Austausch eines Prüf-Schlüssels 520 mit optional beschränkter (z.B. zeitlich beschränkt und/oder beschränkt auf mindestens eine vorgegebene Aktion) Gültigkeit wird die eingangs erwähnte und durch die zunehmende Internet-Kriminalität bestehende Gefahr der missbräuchlichen Nutzung der privilegierten Zugangs-Möglichkeiten minimiert.

Eine weitere zusätzliche Absicherung stellt die optionale Signierung und/oder Verschlüsselung der über die erste Kommunikationsbeziehung 500 übermittelten Wartungsinformationen 530 (seitens des Wartungscenters 300) durch den für die Kundendienst-Transaktion erzeugten Prüf-Schlüssel 520 dar (im Rahmen eines beispielsweisen symmetrischen Verschlüsselungsverfahrens), wobei durch die Waschmaschine 103 die Authentifizierung sowie Entschlüsselung mittels dem durch die Textnachricht 540 über die zweite Kommunikationsbeziehung 700 übermittelten Prüf-Schlüssel 520 erfolgt.

Eine zusätzliche Sicherheit stellt das Erfordernis der Anwesenheit bzw. Aktion des Kunden bzw. Nutzers direkt vor Ort am betroffenen Haushaltsgerät während der Durchführung einer speziellen Remote-Kundendienst-Transaktion dar. Dies kann z.B. durch vom Nutzer auszuführende, (periodische) interaktive Handlungen mittels einer beispielsweise im mobilen Kommunikationsendgerät ablaufenden Applikation während des Bestehens der NFC-Verbindung zum Haushaltsgerät erreicht werden. Die Steuerung und Kontrolle der durch den Nutzer auszuführenden interaktiven Handlungen kann beispielsweise durch das Remote-Kundendienstcenter erfolgen.

Durch die für die Ausführung des vorgeschlagenen Verfahrens erforderliche Nutzung eines z.B. mobilen Kommunikationsendgerätes in Verbindung mit einem dem Nutzer bzw. Haushalt eindeutig zugeordneten Mobilfunk-Zugang zusammen mit der NFC-Datenübertragung im Rahmen einer Zwei-Wege-Kommunikation wird ein seitens des Nutzers potentiell wahrgenommener Verlust der unmittelbaren und überwachenden Kontrolle durch den Nutzer selbst minimiert bzw. beseitigt.

### Bezugszeichenliste

- 100: Haushalt
- 101: Kühlschrank
- 102: Backofen
- 103: Waschmaschine
- 105: Netzwerkschnittstelle
- 110: Heimnetzwerk
- 120: Verschlüsselungseinrichtung (Waschmaschine)
- 125: NFC-Vorrichtung
- 130: Verbindung Internet
- 140: privater Schlüssel (Waschmaschine)
- 141: öffentlicher Schlüssel (Waschmaschine)
- 145: Mobilfunknummer
- 150: Smartphone
- 200: globales Kommunikationsnetz (Internet)
- 300: Kundendienstcenter
- 301: Kundendienst-Server
- 302: Verschlüsselungseinrichtung (Kundendienstcenter)
- 310: lokales Kommunikationsnetz
- 320: Verbindung Internet
- 350: privater Schlüssel (Kundendienstcenter)
- 351: öffentlicher Schlüssel (Kundendienstcenter)
- 400: Mobilfunknetz
- 420: Verbindung Mobilfunknetz
- 500: bidirektionale Internetverbindung
- 510: Kundendienstanforderung
- 520: Prüf-Schlüssel
- 530: Wartungsinformationen
- 540: Textnachricht
- 700: NFC (Near Field Communication) Verbindung

## Patentansprüche

1. Verfahren zur Verarbeitung von Informationen in einem Haushaltsgerät (101 bis 103), bei dem
- von dem Haushaltsgerät (103) eine Nachricht (510) an eine zentrale Einheit (300) übermittelt wird,
- von der zentralen Einheit (300) erste Informationen (520, 530) über eine erste Kommunikationsbeziehung (500) an das Haushaltsgerät (103) übermittelt werden,
- von der zentralen Einheit (300) zweite Informationen (520) an ein Kommunikationsendgerät (150) übermittelt werden und
- von dem Kommunikationsendgerät (150) die zweiten Informationen (520) über eine zweite Kommunikationsbeziehung (700) an das Haushaltsgerät (103) übermittelt werden,
- wobei durch das Haushaltsgerät (103) die ersten Informationen (520, 530) mit Hilfe der zweiten Informationen (520) überprüft werden,
- **dadurch gekennzeichnet, dass**
- die zweite Kommunikationsbeziehung (700) als eine Punkt-zu-Punktverbindung mit begrenzter Reichweite ausgestaltet ist, so dass eine erfolgreiche Überprüfung der ersten Informationen (520, 530) mit Hilfe der zweiten Informationen (520) als Zustimmung eines Nutzers verstanden werden kann.

2. Verfahren nach Anspruch 1, bei dem das Überprüfen eine Authentifizierung der ersten Informationen (520, 530) umfasst.

3. Verfahren nach einem der vorherigen Ansprüche, bei dem nach einer erfolgreichen Überprüfung zumindest eine vorgegebene Aktion durchgeführt wird.

4. Verfahren nach Anspruch 3, bei dem die vorgegebene Aktion
- eine Aktualisierung einer Software des Haushaltsgerätes,
- eine Erweiterung einer Funktionalität des Haushaltsgerätes,
- eine Durchführung einer Wartungsaktion oder Wartungsanwendung,
- eine Übermittlung einer Wartungsinformation an einen Adressaten,
- eine Durchführung eines Tests,
- eine Ausführung von Kommandoinformationen zur Diagnosesteuerung,
- eine Ausführung der ersten Informationen, oder
- eine Verwendung der ersten Informationen,
umfasst.

5. Verfahren nach einem der vorherigen Ansprüche, bei dem die zweiten Informationen (520) über eine Mobilfunk-Verbindung an das Kommunikationsendgerät (150) übermittelt werden.

6. Verfahren nach Anspruch 5, bei dem die zweiten Informationen (520) mittels
- einer MMS,
- einer SMS oder
- einer E-Mail
übermittelt werden.

7. Verfahren nach einem der vorhergehenden Ansprüche, bei dem die zweite Kommunikationsbeziehung (700) als
- Nahbereichskommunikation-Verbindung,
- Bluetooth-Verbindung oder
- Infrarot-Verbindung
ausgestaltet ist.

8. Verfahren nach einem der vorhergehenden Ansprüche, bei dem die zweiten Informationen (520) zumindest teilweise Schlüsselinformationen umfassen.

9. Verfahren nach einem der vorhergehenden Ansprüche, bei dem die Nachricht (510) von dem Haushaltsgerät (103) vor der Übermittlung mit Hilfe eines asymmetrischen Verschlüsselungsverfahrens signiert wird.

10. Verfahren nach einem der vorhergehenden Ansprüche, bei dem die über das Kommunikationsendgerät (150) übermittelten zweiten Informationen (520) vor der Übermittlung von der zentralen Einheit (300) mit Hilfe eines asymmetrischen Verschlüsselungsverfahrens signiert werden.

11. Verfahren nach Anspruch 10, bei dem die über die zweite Kommunikationsbeziehung (700) übermittelten signierten zweiten Informationen (520) von dem Haushaltsgerät (103) authentifiziert werden.

12. Verfahren nach Anspruch 10 oder 11, bei dem die übermittelten signierten zweiten Informationen (520) von dem Kommunikationsendgerät (150) authentifiziert werden.

13. Verfahren nach einem der vorhergehenden Ansprüche, bei dem der Aufbau der zweiten Kommunikationsbeziehung (700) durch Eingabe eines persönlichen Identifizierungscodes (PIN) gesichert ist.

14. Verfahren nach einem der vorhergehenden Ansprüche, bei dem die erste Kommunikationsbeziehung (500) als kryptographisch gesicherte Datenverbindung über das Internet ausgestaltet ist.

15. Anordnung zur Verarbeitung von Informationen in einem Haushaltsgerät (101 bis 103), mit
- dem Haushaltsgerät (103) zugeordneten Sendemitteln (105) zum Übermitteln einer Nachricht (510) an eine zentrale Einheit (300),
- zumindest einer der zentralen Einheit (300) zugeordneten Einrichtung (301, 302) zum
- Übermitteln von ersten Informationen (520, 530) über eine erste Kommunikationsbeziehung (500) an das Haushaltsgerät (103) und
- Übermitteln von zweiten Informationen (520) an ein Kommunikationsendgerät (150) und
- dem Kommunikationsendgerät (150) zugeordneten Sendemitteln zum Übermitteln der zweiten Informationen (520) über eine zweite Kommunikationsbeziehung (700) an das Haushaltsgerät (103) und
- dem Haushaltsgerät (103) zugeordneten Überprüfungsmittel zur Überprüfung der ersten Informationen (520, 530) mit Hilfe der zweiten Informationen (520),
- **dadurch gekennzeichnet, dass**
- die zweite Kommunikationsbeziehung (700) als eine Punkt-zu-Punktverbindung mit begrenzter Reichweite ausgestaltet ist, so dass eine erfolgreiche Überprüfung der ersten Informationen (520, 530) mit Hilfe der zweiten Informationen (520) als Zustimmung eines Nutzers verstanden werden kann.

16. Haushaltsgerät zur Verarbeitung von Informationen, mit
- Sendemitteln (105) zum Übermitteln einer Nachricht (510) an eine zentrale Einheit (300),
- Empfangsmitteln (105) zum Empfang von
- von der zentralen Einheit (300) über eine erste Kommunikationsbeziehung (500) übermittelten ersten Informationen (520, 530) und
- von einem Kommunikationsendgerät (150) über eine zweite Kommunikationsbeziehung (700) übermittelten zweiten Informationen (520) und
- Überprüfungsmittel zur Überprüfung der ersten Informationen (520, 530) mit Hilfe der zweiten Informationen (520),
- **dadurch gekennzeichnet, dass**
- die zweite Kommunikationsbeziehung (700) als eine Punkt-zu-Punktverbindung mit begrenzter Reichweite ausgestaltet ist, so dass eine erfolgreiche Überprüfung der ersten Informationen (520, 530) mit Hilfe der zweiten Informationen (520) als Zustimmung eines Nutzers verstanden werden kann.

## Claims

1. Method for processing information in a household appliance (101 to 103), in which
- a message (510) is transmitted from the household appliance (103) to a central unit (300),
- first information (520, 530) is transmitted from the central unit (300) to the household appliance (103) via a first communication link (500),
- second information (520) is transmitted from the central unit (300) to a communication terminal (150), and
- the second information (520) is transmitted from the communication terminal (150) to the household appliance (103) via a second communication link (700),
- wherein the first information (520, 530) is checked by the household appliance (103) with the aid of the second information (520),
- **characterised in that**
- the second communication link (700) is embodied as a point-to-point connection with limited range, such that a successful check of the first information (520, 530) with the aid of the second information (520) can be understood to imply consent of a user.

2. Method according to claim 1, in which the check comprises an authentication of the first information (520, 530).

3. Method according to one of the preceding claims, in which at least one predetermined action is performed following a successful check.

4. Method according to claim 3, in which the predetermined action comprises
- an update to software of the household appliance,
- an extension to the functionality of the household appliance,
- performance of a maintenance action or maintenance application,
- transmission of maintenance information to a recipient,
- performance of a test,
- execution of command information for diagnostic control,
- execution of the first information, or
- use of the first information.

5. Method according to one of the preceding claims, in which the second information (520) is transmitted to the communication terminal (150) via a mobile radio connection.

6. Method according to claim 5, in which the second information (520) is transmitted by means of
- an MMS,
- an SMS or
- an e-mail.

7. Method according to one of the preceding claims, in which the second communication link (700) is embodied as
- a near-field communication connection,
- a Bluetooth connection, or
- an infrared connection.

8. Method according to one of the preceding claims, in which the second information (520) at least partially comprises key information.

9. Method according to one of the preceding claims, in which the message (510) is signed by the household appliance (103) with the aid of an asymmetric encryption method before the transmission.

10. Method according to one of the preceding claims, in which the second information (520) that is transmitted via the communication terminal (150) is signed by the central unit (300) with the aid of an asymmetric encryption method before the transmission.

11. Method according to claim 10, in which the signed second information (520) transmitted via the second communication link (700) is authenticated by the household appliance (103).

12. Method according to claim 10 or 11, in which the transmitted signed second information (520) is authenticated by the communication terminal (150).

13. Method according to one of the preceding claims, in which the setting up of the second communication link (700) is protected by entry of a personal identification code (PIN).

14. Method according to one of the preceding claims, in which the first communication link (500) is embodied as a cryptographically protected data connection via the Internet.

15. Arrangement for processing information in a household appliance (101 to 103), comprising
- sending means (105) which are assigned to the household appliance (103) for the purpose of transmitting a message (510) to a central unit (300),
- at least one device (301, 302) which is assigned to the central unit (300) for the purpose of
- transmitting first information (520, 530) to the household appliance (103) via a first communication link (500) and
- transmitting second information (520) to a communication terminal (150), and
- sending means which are assigned to the communication terminal (150) for the purpose of transmitting the second information (520) to the household appliance (103) via a second communication link (700), and
- checking means which are assigned to the household appliance (103) for the purpose of checking the first information (520, 530) with the aid of the second information (520),
- **characterized in that**
- the second communication link (700) is embodied as a point-to-point connection with limited range, such that a successful check of the first information (520, 530) with the aid of the second information (520) can be understood to imply consent of a user.

16. Household appliance for processing information, comprising
- sending means (105) for transmitting a message (510) to a central unit (300),
- receiving means (105) for receiving
- first information (520, 530) transmitted from the central unit (300) via a first communication link (500) and
- second information (520) transmitted from a communication terminal (150) via a second communication link (700), and
- checking means for checking the first information (520, 530) with the aid of the second information (520),
- **characterised in that**
- the second communication link (700) is embodied as a point-to-point connection with limited range, such that a successful check of the first information (520, 530) with the aid of the second information (520) can be understood to imply consent of a user.

## Revendications

1. Procédé de traitement d'informations dans un appareil électroménager (101 à 103), dans lequel
- un message (510) est transmis de l'appareil électroménager (103) à une unité centrale (300),
- des premières informations (520, 530) sont transmises de l'unité centrale (300) à l'appareil électroménager (103) via une première relation de communication (500),
- des secondes informations (520) sont transmises de l'unité centrale (300) à un terminal de communication (150), et
- les secondes informations (520) sont transmises du terminal de communication (150) à l'appareil électroménager (103) via une seconde relation de communication (700),
- dans lequel l'appareil électroménager (103) vérifie les premières informations (520, 530) en utilisant les secondes informations (520),
- **caractérisé en ce que**
- la seconde relation de communication (700) est configurée comme une connexion point à point avec une portée limitée, de sorte qu'une vérification réussie des premières informations (520, 530) à l'aide des secondes informations (520) peut être comprise comme consentement d'un utilisateur.

2. Procédé selon la revendication 1, dans lequel la vérification comprend une authentification des premières informations (520, 530).

3. Procédé selon l'une des revendications précédentes, dans lequel, après une vérification réussie, au moins une action prédéterminée est effectuée.

4. Procédé selon la revendication 3, dans lequel l'action prédéterminée comprend
- une mise à jour d'un logiciel de l'appareil électroménager,
- une extension d'une fonctionnalité de l'appareil électroménager,
- une mise en oeuvre d'une maintenance ou d'une application de maintenance,
- une transmission d'une information de maintenance à un destinataire,
- une mise en oeuvre d'un test,
- une exécution d'informations de commande pour le contrôle du diagnostic,
- une exécution de la première information, ou
- une utilisation de la première information.

5. Procédé selon l'une des revendications précédentes, dans lequel les secondes informations (520) sont transmises au terminal de communication (150) via une connexion radio mobile.

6. Procédé selon la revendication 5, dans lequel les secondes informations (520) sont transmises au moyen
- d'un MMS,
- d'un SMS ou
- d'un mail.

7. Procédé selon l'une des revendications précédentes, dans lequel la seconde relation de communication (700) est conçue en tant que
- connexion de communication à courte portée,
- connexion Bluetooth ou
- connexion infrarouge.

8. Procédé selon l'une des revendications précédentes, dans lequel les secondes informations (520) comprennent au moins partiellement des informations de clé.

9. Procédé selon l'une des revendications précédentes, dans lequel le message (510) est signé par l'appareil électroménager (103) avant sa transmission à l'aide d'un procédé de cryptage asymétrique.

10. Procédé selon l'une des revendications précédentes, dans lequel les secondes informations (520) transmises via le terminal de communication (150) sont signées par l'unité centrale (300) avant la transmission à l'aide d'un procédé de cryptage asymétrique.

11. Procédé selon la revendication 10, dans lequel les secondes informations signées (520) transmises via la seconde relation de communication (700) sont authentifiées par l'appareil électroménager (103).

12. Procédé selon la revendication 10 ou 11, dans lequel les secondes informations signées (520) transmises sont authentifiées par l'appareil électroménager (150).

13. Procédé selon l'une des revendications précédentes, dans lequel la structure de la seconde relation de communication (700) est sécurisée par saisie d'un code d'identification (PIN) personnel.

14. Procédé selon l'une des revendications précédentes, dans lequel la première relation de communication (500) est conçue comme une connexion de données sécurisée de manière cryptographique via Internet.

15. Agencement pour le traitement d'informations dans un appareil électroménager (101 à 103), avec
- des moyens de transmission (105) associés à l'appareil électroménager (103) pour transmettre un message (510) à une unité centrale (300),
- au moins un dispositif (301, 302) affecté à l'unité centrale (300) pour
- la transmission de premières informations (520, 530) via une première relation de communication (500) à l'appareil électroménager (103) et
- la transmission de secondes informations (520) à un terminal de communication (150), et
- des moyens de transmission associés au terminal de communication (150) pour la transmission des secondes informations (520) via une seconde relation de communication (700) à l'appareil électroménager (103) et
- des moyens de contrôle associés à l'appareil électroménager (103) pour la vérification des premières informations (520, 530) à l'aide des secondes informations (520),
- **caractérisé en ce que**
- la seconde relation de communication (700) est conçue en tant que connexion point à point avec une portée limitée, de sorte qu'une vérification réussie des premières informations (520, 530) à l'aide des secondes informations (520) peut être comprise comme consentement d'un utilisateur.

16. Appareil électroménager de traitement d'informations, avec
- des moyens de transmission (105) pour transmettre un message (510) à une unité centrale (300)
- des moyens de réception (105) pour recevoir
- des premières informations (520, 530) transmises à partir de l'unité centrale (300) via une première relation de communication (500) et
- des secondes informations (520) transmises à partir d'un terminal de communication (150) via une seconde relation de communication (700) et
- un moyen de contrôle pour vérifier les premières informations (520, 530) à l'aide des secondes informations (520),
- **caractérisé en ce que**
- la seconde relation de communication (700) est conçue en tant qu'une connexion point à point avec une portée limitée, de sorte qu'une vérification réussie des premières informations (520, 530) à l'aide des secondes informations (520) peut être comprise comme consentement d'un utilisateur.
